# FASCICULE DE BREVET EUROPEEN

(11) **EP 1 776 248 B1**
(45) Date de publication et mention de la délivrance du brevet: **03.12.2008**
(21) Numéro de dépôt: 05772032.8
(22) Date de dépôt: 02.08.2005
(51) Int. Cl.: B60C 15/00

(54) **BOURRELET DE PNEUMATIQUE**
REIFENWULST
TYRE BEAD

(30) Priorité: 02.08.2004 FR 0408555
(43) Date de publication de la demande: 25.04.2007
(73) Titulaire: Société de Technologie Michelin, 63000 Clermont-Ferrand (FR); Michelin Recherche et Technique S.A., 1763 Granges-Paccot (CH)
(72) Inventeur: FERLIN, Olivier, F-63200 Malauzat (FR)
(74) Mandataire: Diernaz, Christian
(86) Numéro de dépôt international: PCT/EP2005/053750
(87) Numéro de publication internationale: WO 2006/013201

(56) Documents cités:
- PATENT ABSTRACTS OF JAPAN vol. 2000, no. 02, 29 février 2000 (2000-02-29) & JP 11 321244 A (SUMITOMO RUBBER IND LTD), 24 novembre 1999 (1999-11-24)
- PATENT ABSTRACTS OF JAPAN vol. 2000, no. 11, 3 janvier 2001 (2001-01-03) & JP 2000 219016 A (BRIDGESTONE CORP), 8 août 2000 (2000-08-08)

## Description

La présente invention concerne un pneumatique à armature de carcasse radiale et plus particulièrement un pneumatique destiné à équiper des véhicules poids lourd pour porter de lourdes charges et notamment des camions, autobus, remorques, et dans lequel une nouvelle structure de renforcement des bourrelets est adaptée pour améliorer l'endurance du pneumatique.

Comme connu, un pneumatique du type considéré comprend des bourrelets destinés à coopérer avec des sièges d'une jante de montage, ces bourrelets étant reliés à un sommet du pneumatique par des flancs. Ce pneumatique comprend une armature de carcasse formée d'au moins une pluralité de câbles métalliques ou non orientés dans une direction méridienne, c'est-à-dire dans une direction faisant un angle égal à ou voisin de 90° avec la direction circonférentielle. Cette armature de carcasse est ancrée dans chaque bourrelet à au moins une armature de renforcement circonférentiel de bourrelet (par exemple une tringle), en formant un retournement. L'armature de carcasse est radialement surmontée d'une armature de sommet, composée d'au moins deux empilements de renforts métalliques, croisés d'un empilement au suivant en formant avec la direction circonférentielle des angles compris entre 10° et 45°. En outre, les retournements d'armature de carcasse sont usuellement renforcés par au moins une armature de renforcement supplémentaire dont les renforts métalliques ou non sont disposés de façon à faire un angle inférieur à 45° avec la direction circonférentielle.

Sous certaines sollicitations, les bourrelets de pneumatique sont soumis à des conditions de température relativement élevées comparées aux températures moyennes de fonctionnement. Ces augmentations de température proviennent notamment d'un échauffement des organes de freinage des véhicules poids lourd et du rayonnement qui en résulte.

Pour augmenter l'endurance des bourrelets des pneumatiques, il est connu de pourvoir lesdits bourrelets avec des armatures supplémentaires de renforcement qui sont disposées dans les bourrelets de manière à être intercalées entre le siège desdits bourrelets et l'armature de renforcement circonférentiel d'ancrage de l'armature de carcasse. Toutefois, cette solution fait apparaître des contraintes élevées à l'extrémité radialement à l'extérieur de ces armatures supplémentaires, ces contraintes pouvant être préjudiciables à l'endurance du pneumatique.

Dans une autre solution (décrite notamment dans la publication de brevet FR 1328752) il est décrit un bourrelet comprenant une tringle autour de laquelle est enroulée l'armature de carcasse et son retournement. Si cette solution présente effectivement une amélioration de la tenue du bourrelet, il n'en demeure pas moins qu'elle n'est pas totalement satisfaisante et qu'en particulier elle nécessite la mise en place d'un enroulement de câbles sur la partie radialement à l'extérieur de la tringle et du retournement de manière à bloquer ledit retournement sur la tringle.

La durée d'utilisation des pneumatiques augmentant (en particulier sur le critère d'usure de la bande de roulement), il a été constaté que des températures élevées appliquées au pneumatique de manière répétée conduisaient à des déformations permanentes des bourrelets réduisant l'endurance desdits bourrelets.

L'objectif de l'invention est d'obtenir une structure de bourrelet de pneumatique pour véhicule portant de lourdes charges, cette structure conférant audit bourrelet une endurance appropriée par rapport aux besoins de l'utilisateur tout en réduisant le nombre de composants.

Dans ce but, le pneumatique selon l'invention comprend deux bourrelets prévus pour coopérer avec des sièges d'une jante de montage. Ce pneumatique comprend une armature de carcasse radiale ancrée dans chaque bourrelet grâce à un retournement formant au moins une boucle complète autour d'une armature de renforcement circonférentiel de bourrelet, ce retournement - vu en coupe méridienne, c'est-à-dire dans un plan contenant l'axe de rotation du pneumatique - prenant naissance en un point d'origine correspondant au point d'intersection entre l'armature de carcasse et une droite perpendiculaire à l'axe de rotation du pneumatique et passant par le point de l'armature de renforcement circonférentiel de bourrelet radialement le plus à l'intérieur, ce pneumatique étant caractérisé en ce que, vu en coupe méridienne, l'extrémité du retournement est située entre ledit retournement de l'armature de carcasse et l'armature de renforcement circonférentiel de bourrelet.

Grâce à cette structure en forme de boucle complète (c'est-à-dire dont le retournement passe au moins deux fois par ou à proximité du point d'origine dudit retournement), l'ancrage de l'armature de carcasse est amélioré, ce qui a pour effet de permettre une meilleure tenue mécanique du bourrelet soumis à des échauffements répétitifs ; en effet, la position de l'extrémité du retournement retenue créé un coincement de l'extrémité de l'armature de carcasse entre l'armature de renforcement de bourrelet et le siège de la jante d'utilisation lorsque le pneumatique est monté sur ladite jante.

De manière connue, l'armature de renforcement de bourrelet est formée d'au moins une tringle (c'est-à-dire au moins un fil ou un câble ou un assemblage de fils ou de câbles en une structure continue circonférentiellement et ayant une rigidité d'extension appropriée) de section méridienne pouvant être, notamment mais pas exclusivement, circulaire ou bien rectangulaire.

Dans la plupart des cas, les pneumatiques pour poids lourd ou les pneumatiques destinés à des engins portant de très lourdes charges ont une armature de carcasse comprenant une pluralité de renforts métalliques (sous forme de fils ou de câbles). Selon la dimension du pneumatique concerné, ces renforts métalliques ont des caractéristiques telles qu'il est parfois difficile de leur faire prendre une courbure trop petite lorsqu'on veut former une boucle avec le retournement de carcasse. Dans de pareils cas, il est proposé de prolonger l'armature de carcasse par une extension de manière à former un retournement en forme de boucle d'ancrage selon l'invention, une extrémité de ladite extension étant située entre le retournement de l'armature de carcasse et l'armature de renforcement circonférentiel de bourrelet. Il est précisé que le point de début du retournement,vue dans un plan de coupe méridien contenant l'axe de rotation, correspond au point d'intersection de l'armature de carcasse avec une droite perpendiculaire à l'axe de rotation du pneumatique, cette droite passant par le point radialement le plus à l'intérieur de l'armature de renforcement circonférentiel de bourrelet. Par ailleurs, l'autre extrémité du retournement correspond au point d'extrémité de l'extension linéairement la plus éloignée du point de début du retournement.

De manière connue, il peut être prévu un enrobage, par exemple en mélange de caoutchouc, autour de l'armature de renforcement circonférentiel de bourrelet, comme une tringle, afin d'éviter le contact direct entre l'armature de carcasse et ladite tringle.

Afin de compenser l'absence de retournement se prolongeant dans le bourrelet et coopérant avec l'armature de carcasse radialement au delà de la tringle comparativement à une structure usuelle de bourrelet, il est avantageux de prévoir que le point le plus à l'extérieur de la boucle formée par le retournement est situé à une distance de l'axe de l'axe de rotation qui est supérieure au rayon des points radialement les plus à l'extérieur de la jante (en pratique, une jante comprend des sièges prolongés axialement à l'extérieur par des rebords ou crochets destinés à limiter le déplacement axial des bourrelets lorsque le pneumatique est monté sur sa jante et gonflé).

Ainsi la boucle autour de la tringle et de son enrobage forme une partie radialement à l'extérieur qui est de dimension appropriée pour créer un support à l'armature de carcasse dans les mouvements de flexion cyclique à chaque tour de roue et ainsi éviter une flexion localisée notamment autour du crochet de jante.

### Description de variantes de réalisation

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une coupe d'un bourrelet de pneumatique dont l'armature de renforcement circonférentiel de bourrelet est une tringle de section circulaire ;

La figure 2 montre une coupe d'un pneumatique avec une tringle de section sensiblement rectangulaire et enrobée dans un profilé ayant une forme externe sensiblement circulaire ;

La figure 3 montre une autre variante de bourrelet correspondant à celui de la figure 2 selon laquelle le retournement d'armature de carcasse est prolongé par une extension ;

Les figures 4A et 4B montrent un dispositif apte à la réalisation d'un bourrelet selon l'invention.

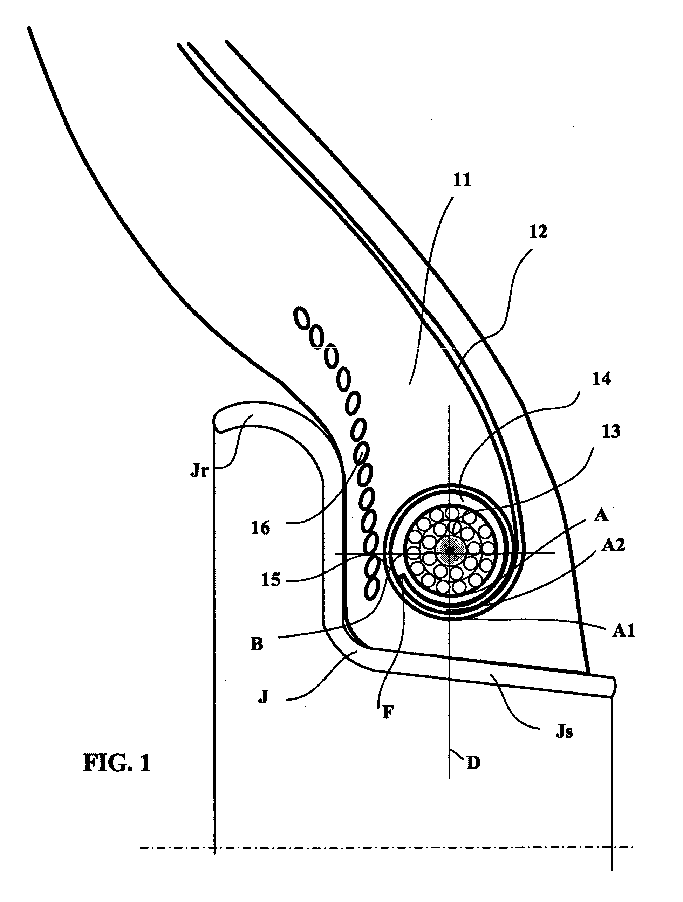

La figure 1 montre une coupe dans un plan méridien (c'est-à-dire un plan contenant l'axe de rotation du pneumatique) d'un bourrelet 11 de pneumatique selon l'invention. Ce bourrelet d'un pneumatique destiné à être monté sur une jante J présentant des sièges Js faiblement inclinés (angle avec l'axe de rotation inférieur ou égal à 10°) prolongés axialement à l'extérieur par des rebords Jr, comprend une armature de carcasse 12 ancrée autour d'une armature de renforcement circonférentiel de bourrelet formée par une tringle 13 de section sensiblement circulaire. La tringle 13 d'ancrage est formée d'une pluralité de fils enroulés en hélice autour d'un fil d'âme; cette tringle 13 est enrobée d'un profilé 14 en mélange de caoutchouc assurant la liaison mécanique avec l'armature de carcasse 12.

L'armature de carcasse 12 est composée d'un mélange de caoutchouc renforcé par une pluralité de câbles métalliques orientés dans une direction sensiblement radiale (c'est-à-dire formant un angle proche de ou égal à 90° avec la direction circonférentielle).

On définit, dans le plan méridien de la figure 1, le début du retournement 15 de l'armature de carcasse 12 par un point A1 obtenu comme l'intersection de l'armature de carcasse 12 avec une droite D perpendiculaire à l'axe de rotation du pneumatique et passant par un point A radialement le plus à l'intérieur de la tringle 13. On repère par la lettre F l'autre extrémité du retournement 15 de l'armature de carcasse.

Dans le bourrelet 11 montré, le retournement est enroulé autour de la tringle pour former une boucle complète, c'est-à-dire une boucle qui; outre le point A1 de début de retournement, coupe une nouvelle fois la droite D en un point A2 et se termine au point d'extrémité F situé axialement à l'extérieur de la droite D (par axialement à l'extérieur, on entend à l'extérieur de la cavité délimitée par le pneumatique). La partie d'extrémité du retournement (partie entre les points A2 et F) se trouve ainsi coincée entre le retournement lui-même et la tringle, ce qui conduit à un ancrage amélioré de l'armature de carcasse 12 par coincement entre le point radialement le plus à l'intérieur de la tringle 13 et le siège Js de la jante.

Préférentiellement, pour de tels types de pneumatiques de véhicules poids lourd, le retournement 15 est localisé au moins entre le point A et un point B correspondant au point de la tringle axialement le plus à l'extérieur. De cette façon, les pressions de contact contre le rebord Jr de la jante servent à améliorer l'ancrage de l'armature de carcasse.

Comme cela est visible, le bourrelet 11 comprend en outre une armature supplémentaire de renforcement 16 formée d'une pluralité de renforts inclinés par rapport à la direction circonférentielle d'un angle inférieur à 90°; dans le cas montré, cette armature supplémentaire 16 présente une extrémité radialement interne localisée radialement à l'intérieur par rapport au point B. Pour augmenter encore l'effet de coincement de la boucle formée par le retournement, il est possible de prolonger cette armature supplémentaire de renforcement 16 de bourrelet radialement sous la tringle 13.

Cette même structure peut avantageusement être appliquée au cas d'une armature de carcasse dont les renforts sont de nature textile.

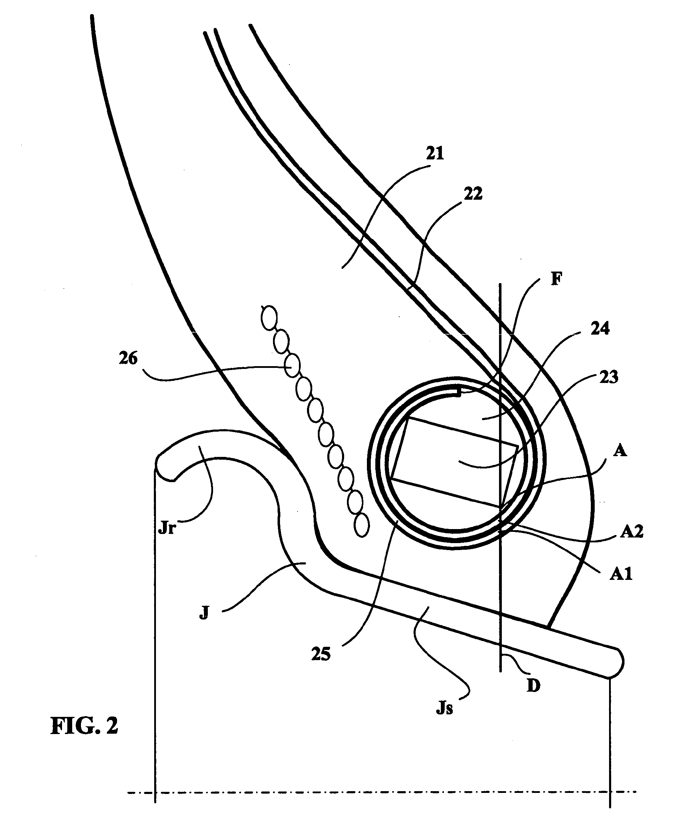

La figure 2 montre une coupe méridienne d'un bourrelet 21 d'un pneumatique destiné à être monté sur une jante J dont les sièges Js sont inclinés d'un angle égaux sensiblement à 15°, ces sièges étant prolongés axialement à l'extérieur par des crochets Jc.

Dans cet exemple de pneumatique selon l'invention, une armature de carcasse 22, comprenant une pluralité de renforts sous la forme de câbles métalliques, est ancrée dans chacun des bourrelets à une tringle 23 de section sensiblement quadrilatère, deux des côtés de cette section de tringle ayant une inclinaison proche ou égale de l'inclinaison des sièges Js de jante. Cette tringle 23 est enrobée dans un profilé 24 ayant, vue dans le plan de la figure 2, une forme externe sensiblement circulaire.

Le retournement 25 de l'armature de carcasse 22 forme une boucle complète prenant naissance au point A1 obtenu comme l'intersection de l'armature de carcasse 22 avec une droite D perpendiculaire à l'axe de rotation du pneumatique et passant par un point A radialement le plus à l'intérieur de la tringle 23. L'autre extrémité du retournement de l'armature de carcasse est repérée par le point F sur la figure 2, ledit point F étant situé dans la partie radialement à l'extérieur de la tringle 23. Il est en outre prévu une armature supplémentaire de renforcement 26 de bourrelet située axialement à l'extérieur de la boucle formée par le retournement 25 de la carcasse (c'est-à-dire du côté de la partie du bourrelet destinée à venir en contact avec le crochet Jc de la jante de montage).

Une variante, non montrée, consiste à prolonger l'armature supplémentaire de renforcement 26 axialement vers l'intérieur de manière à être coincée radialement entre la tringle 23 et le siège Js de la jante de montage.

Les structures de bourrelet selon l'invention présentent un avantage certain par rapport à l'état de la technique relatif au cas des armatures de carcasse dont les renforts sont métalliques (sous forme de câbles). En effet, dans de tels cas, l'application de l'enseignement de l'invention permet d'éviter d'avoir à réaliser une déformation permanente des renforts (déformation plastique des éléments métalliques composant les câbles) avant ou en cours de fabrication. Bien entendu, il est aussi possible de réaliser une telle déformation plastique permanente selon le besoin, par exemple après avoir procédé à la réalisation de la boucle.

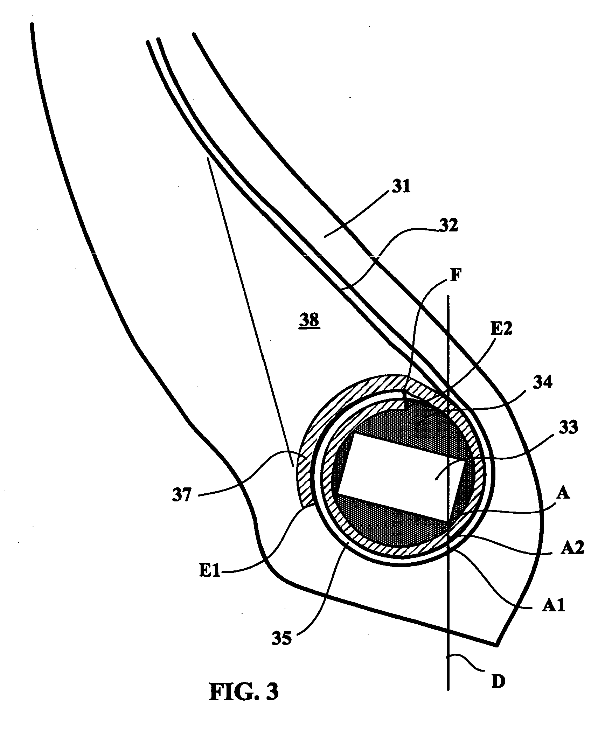

La figure 3 montre une autre variante de bourrelet 31, selon l'invention, correspondant au bourrelet de la figure 2 à l'exception du fait que le retournement 35 d'armature de carcasse est prolongé par une extension 37 pour former une boucle complète entre un point A1 (intersection d'une droite D perpendiculaire à l'axe de rotation et passant par le point A radialement le plus à l'intérieur de la tringle 33) et un point F situé à une extrémité de l'extension.

L'armature de carcasse 32 est ancrée autour d'une tringle 33 enrobée dans un profilé 34 de mélange de caoutchouc ; cette armature de carcasse comprend un retournement 35 qui prend naissance au point A et s'étend jusqu'au point F pour entourer en partie seulement le profilé 34 ; ce retournement 35 est prolongé par une extension 37 couplée à l'armature de carcasse entre un point E1 et le point d'extrémité F du retournement 35 sur une longueur égale environ à la moitié de la longueur dudit retournement. L'extension 37 prolongeant le retournement 35 passe ensuite par un point A2 entre le point A et le point A1 pour se terminer en un point E2 radialement à l'extérieur de la tringle 33.

Cette structure est particulièrement avantageuse dès que les câbles de l'armature de carcasse présentent des caractéristiques de rigidité à la flexion qui rendent délicate la formation et le maintien en place d'une boucle complète autour d'une tringle. L'armature de couplage formant l'extension est choisie, entre autres, pour ses propriétés facilitant la prise de courbure et donc la formation d'une boucle. Cette variante de structure de bourrelet montrée avec la figure 3 peut comporter une (cas présenté) ou plusieurs armatures de couplage, situées d'un même côté du retournement ou de part et d'autre. Dans une autre variante, au moins une extension est prolongée jusqu'à être couplée avec la totalité du retournement voire même prolongée du côté intérieur du bourrelet le long de l'armature de carcasse.

L'invention n'est pas limitée aux exemples décrits et représentés et diverses modifications peuvent y être apportées sans sortir de son cadre. Et en particulier, il est possible de prévoir la présence d'au moins une déformation plastique sur le retournement de l'armature de carcasse dont les renforts sont métalliques (cette déformation plastique étant par exemple réalisée avant la fabrication du pneumatique).

En outre, le sens de l'enroulement du retournement de l'armature de carcasse qui a été présenté dans les variantes décrites comme allant de l'intérieur du pneumatique vers l'extérieur peut être inversé (de l'extérieur vers l'intérieur).

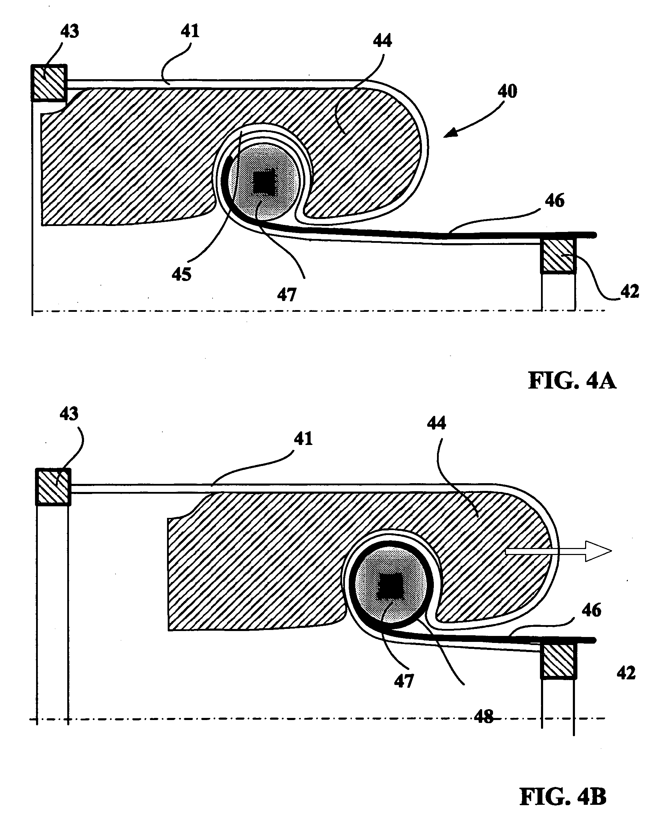

Pour réaliser des pneumatiques comportant des bourrelets selon l'invention, on utilise un dispositif d'enroulement 40 tel que celui représenté en coupe méridienne sur les figures 4A et 4B. Ce dispositif d'enroulement 40 permettant d'effectuer l'enroulement du retournement d'armature de carcasse autour d'une armature de renforcement circonférentiel (tringle) comprend notamment une toile d'enroulement 41 ayant quasiment une forme cylindrique et ayant deux extrémités axiales fixées respectivement à deux anneaux 42 et 43 de diamètres différents (dans le cas montré, le diamètre de l'anneau 42 situé axialement à l'intérieur est inférieur au diamètre de l'anneau 43). Les anneaux 42 et 43 sont eux mêmes solidaires de mécanismes d'entraînement en direction axiale (non montrés).

Le dispositif 40 comprend en outre une tête 44 positionnée axialement entre les anneaux 42 et 43, cette tête pouvant être déplacée axialement relativement auxdits anneaux.

En outre, la tête 44 présente une surface externe comprenant radialement à l'intérieur une cavité concave 45 destinée à envelopper au moins en partie une extrémité de l'armature de carcasse 46 à retourner autour d'une tringle 47 de bourrelet.

- Dans la configuration de réalisation de l'enroulement, la toile 41 coopère avec la tête 44, en glissant sur la surface externe de ladite tête, pour entraîner l'extrémité de l'armature de carcasse 46 autour de la tringle 47.

Pour réaliser l'enroulement de l'extrémité de l'armature de carcasse 46 autour de la tringle 47 de bourrelet, on positionne ladite tringle concentriquement à l'armature de carcasse elle même placée au préalable sur un tambour cylindrique de pose ; puis, on met en place le dispositif 40 de manière à ce que l'anneau axialement le plus à l'intérieur 42 soit situé radialement et axialement à l'intérieur de la tringle de bourrelet et de manière à ce que la tringle et l'extrémité de l'armature de carcasse soient placées dans la cavité 45 (cette étape correspond à la figure 4A). Ensuite, on déplace la tête 44 axialement vers l'intérieur (selon la direction repérée par la flèche A sur la figure 4B) pour générer un glissement relatif de la toile 41 sur la surface externe de la tête 44 et ainsi permettre l'entraînement de l'extrémité de carcasse pour former une boucle 48 autour de la tringle..

Grâce à ce dispositif, il est bien entendu possible d'ajuster le nombre de tours d'enroulement (c'est-à-dire de boucles) de l'armature de carcasse autour de la tringle de bourrelet en déterminant au préalable le déplacement axial de la tête du dispositif.

## Revendications

1. Pneumatique ayant deux bourrelets (11, 21, 31) prévus pour coopérer avec des sièges d'une jante (J) de montage, ce pneumatique comprenant une armature de carcasse radiale (12, 22, 32) ancrée dans chaque bourrelet par un retournement (15, 25, 35) formant au moins une boucle autour d'une armature de renforcement circonférentiel (13, 23, 33) de bourrelet, ce retournement - vu en coupe méridienne - prenant naissance en un point d'origine (A1) correspondant au point d'intersection entre l'armature de carcasse et une droite perpendiculaire (D) à l'axe de rotation du pneumatique et passant par le point (A) de l'armature de renforcement circonférentiel (13, 23, 33) de bourrelet radialement le plus à l'intérieur, ce pneumatique étant **caractérisé en ce que,** vu en coupe méridienne, l'extrémité du retournement est située entre ledit retournement (15, 25, 35) de l'armature de carcasse et l'armature de renforcement circonférentiel (13, 23, 33) de bourrelet.

2. Pneumatique selon la revendication 1 **caractérisé en ce que** l'armature de renforcement circonférentiel de bourrelet est constituée par une tringle (13, 23, 33), cette tringle étant enrobée dans un profilé (14, 24, 34) formé par au moins un mélange de caoutchouc, le retournement de l'armature de carcasse formant au moins une boucle entourant à la fois la tringle et ledit enrobage.

3. Pneumatique selon la revendication 1 ou la revendication 2 **caractérisé en ce que** les renforts de l'armature de carcasse (12, 22, 32) sont des câbles métalliques.

4. Pneumatique selon l'une des revendications 1 à 3 **caractérisé en ce qu'**au moins une boucle d'ancrage de l'armature de carcasse (32) est composée d'une première partie formant le retournement (35) de ladite armature et d'une seconde partie formant une extension (37) prolongeant ledit retournement pour former la boucle d'ancrage avec le retournement, une extrémité de ladite extension étant située entre le retournement de l'armature de carcasse et l'armature de renforcement circonférentiel de bourrelet.

5. Pneumatique selon l'une des revendications 1 à 4 **caractérisé en ce qu'**au moins un bourrelet comprend une armature supplémentaire de renforcement (16, 26) dont les renforts font un angle inférieur à 45° avec la direction circonférentielle, ladite armature supplémentaire (16, 26) étant placée axialement à l'extérieur par rapport au retournement (15, 25) de l'armature de carcasse.

6. Pneumatique selon l'une des revendications 1 à 5 **caractérisé en ce que** l'armature de carcasse (12, 22, 32) est ancrée par retournement autour de l'armature de renforcement circonférentiel (13, 23, 33) de bourrelet en allant de l'intérieur vers l'extérieur du pneumatique.

7. Pneumatique selon l'une des revendications 1 à 6 **caractérisé en ce que** le retournement de l'armature de carcasse (15, 25, 35) comprend au moins une déformation plastique.

## Claims

1. Tyre with two beads (11, 21, 31) designed to co-operate with the seats of a mounting rim (J), the tyre comprising a radial carcass reinforcement (12, 22, 32) anchored in each bead by an upturn (15, 25, 35) which forms at least one loop around a circumferential bead reinforcement (13, 23, 33), the upturn - when viewed in meridian section - beginning at a point of origin (A1) that corresponds to the intersection between the carcass reinforcement and a line (D) perpendicular to the tyre's rotation axis and passing through the radially innermost point (A) of the circumferential bead reinforcement (13, 23, 33), the said tyre being **characterised in that** when viewed in meridian section, the end of the upturn is located between the said upturn (15, 25, 35) of the carcass reinforcement and the circumferential bead reinforcement (13, 23, 33).

2. Tyre according to Claim 1, **characterised in that** the circumferential bead reinforcement consists of a bead wire (13, 23, 33), the said bead wire being clad in a profiled element (14, 24, 34) formed of at least one rubber mix, the upturn of the carcass reinforcement forming at least one loop which surrounds both the bead wire and the said cladding.

3. Tyre according to Claims 1 or 2, **characterised in that** the reinforcing elements of the carcass reinforcement (12, 22, 32) are metallic cords.

4. Tyre according to any of Claims 1 to 3, **characterised in that** at least one anchoring loop of the carcass reinforcement (32) consists of a first portion forming the upturn (35) of the said reinforcement and a second portion forming an extension (37) which lengthens the said upturn to form the anchoring loop with the upturn, one end of the said extension being located between the upturn of the carcass reinforcement and the circumferential bead reinforcement.

5. Tyre according to any of Claims 1 to 4, **characterised in that** at least one bead comprises a supplementary reinforcement (16, 26) whose reinforcing elements make an angle smaller than 45° with the circumferential direction, the said supplementary reinforcement (16, 26) being located axially on the outside relative to the upturn (15, 25) of the carcass reinforcement.

6. Tyre according to any of Claims 1 to 5, **characterised in that** the carcass reinforcement (12, 22, 32) is anchored by an upturn around the circumferential bead reinforcement (13, 23, 33) which runs from the inside towards the outside of the tyre.

7. Tyre according to any of Claims 1 to 6, **characterised in that** the upturn (15, 25, 35) of the carcass reinforcement comprises at least one plastic deformation.

## Patentansprüche

1. Luftreifen mit zwei Wülsten (11, 21, 31), die vorgesehen sind, um mit Sitzen einer Montagefelge (J) zusammenzuwirken, wobei dieser Luftreifen eine radiale Karkassenbewehrung (12, 22, 32) aufweist, die in jedem Wulst durch einen Umschlag (15, 25, 35) verankert ist, der mindestens eine Schleife um eine Wulst-Umfangsverstärkungsbewehrung (13, 23, 33) bildet, wobei dieser Umschlag - im Meridianschnitt gesehen - an einem Anfangspunkt (A1) beginnt, der dem Schnittpunkt zwischen der Karkassenbewehrung und einer Geraden (D) lotrecht zur Drehachse des Luftreifens entspricht und durch den radial am weitesten innen liegenden Punkt (A) der Wulst-Umfangsverstärkungsbewehrung (13, 23, 33) verläuft, wobei dieser Luftreifen **dadurch gekennzeichnet ist, dass** im Meridianschnitt gesehen das Ende des Umschlags sich zwischen dem Umschlag (15, 25, 35) der Karkassenbewehrung und der Wulst-Umfangsverstärkungsbewehrung (13, 23, 33) befindet.

2. Luftreifen nach Anspruch 1, **dadurch gekennzeichnet, dass** die Wulst-Umfangsverstärkungsbewehrung aus einem Wulstkern (13, 23, 33) besteht, wobei dieser Wulstkern von einem Profilteil (14, 24, 34) umhüllt wird, das aus mindestens einer Kautschukmischung gebildet ist, wobei der Umschlag der Karkassenbewehrung mindestens eine Schleife bildet, die sowohl den Wulstkern als auch die Umhüllung umgibt.

3. Luftreifen nach Anspruch 1 oder 2, **dadurch gekennzeichnet, dass** die Verstärkungen der Karkassenbewehrung (12, 22, 32) Metallkorde sind.

4. Luftreifen nach einem der Ansprüche 1 bis 3, **dadurch gekennzeichnet, dass** mindestens eine Verankerungsschleife der Karkassenbewehrung (32) aus einem ersten Teil, der den Umschlag (35) der Bewehrung bildet, und aus einem zweiten Teil besteht, der eine Verlängerung (37) bildet, die den Umschlag verlängert, um die Verankerungsschleife mit dem Umschlag zu bilden, wobei ein Ende der Verlängerung sich zwischen dem Umschlag der Karkassenbewehrung und der Wulst-Umfangsverstärkungsbewehrung befindet.

5. Luftreifen nach einem der Ansprüche 1 bis 4, **dadurch gekennzeichnet, dass** mindestens ein Wulst eine zusätzliche Verstärkungsbewehrung (16, 26) aufweist, deren Verstärkungen einen Winkel von weniger als 45° mit der Umfangsrichtung bilden, wobei die zusätzliche Bewehrung (16, 26) bezüglich des Umschlags (15, 25) der Karkassenbewehrung axial außen angeordnet ist.

6. Luftreifen nach einem der Ansprüche 1 bis 5, **dadurch gekennzeichnet, dass** die Karkassenbewehrung (12, 22, 32) durch Umschlag um die Wulst-Umfangsverstärkungsbewehrung (13, 23, 33) von der Innen- zur Außenseite des Luftreifens verankert wird.

7. Luftreifen nach einem der Ansprüche 1 bis 6, **dadurch gekennzeichnet, dass** der Umschlag der Karkassenbewehrung (15, 25, 35) mindestens eine plastische Verformung aufweist.
